# EUROPÄISCHE PATENTSCHRIFT

(11) **EP 1 309 920 B1**
(45) Veröffentlichungstag und Bekanntmachung des Hinweises auf die Patenterteilung: **04.08.2004**
(21) Anmeldenummer: 01966997.7
(22) Anmeldetag: 06.08.2001
(51) Int. Cl.: G06F 13/42

(54) **ADRESSVERGABEVERFAHREN FÜR MINDESTENS EINEN NEU AN EIN BUSSYSTEM ANGESCHLOSSENEN BUSTEILNEHMER**
ADDRESS ASSIGNMENT METHOD FOR AT LEAST ONE BUS DEVICE THAT HAS RECENTLY BEEN CONNECTED TO A BUS SYSTEM
PROCEDE D'ADRESSAGE POUR AU MOINS UN DISPOSITIF DE BUS NOUVELLEMENT RACCORDE A UN SYSTEME DE BUS

(30) Priorität: 18.08.2000 DE 10040438
(43) Veröffentlichungstag der Anmeldung: 14.05.2003
(73) Patentinhaber: SIEMENS AKTIENGESELLSCHAFT, 80333 München (DE)
(72) Erfinder: HEINRICH, Andreas, 09669 Sachsenburg (DE); WEISSBACH, Bernhard, 09669 Frankenberg (DE)
(86) Internationale Anmeldenummer: PCT/DE2001/003004
(87) Internationale Veröffentlichungsnummer: WO 2002/015452

(56) Entgegenhaltungen:
- DE-A- 19 733 906
- US-A- 4 730 251
- US-A- 4 847 834
- US-A- 5 980 078

## Beschreibung

Die vorliegende Erfindung betrifft ein Adressvergabeverfahren für mindestens einen neu an ein Bussystem angeschlossenen Busteilnehmer, der zunächst unter einer voreingestellten Adresse adressierbar ist, wobei ein Busmaster dem Busteilnehmer eine neue Adresse übermittelt, der Busteilnehmer die übermittelte neue Adresse übernimmt und der Busteilnehmer sodann unter der neuen Adresse adressierbar ist.

Adressvergabeverfahren für genau einen neu angeschlossenen Busteilnehmer sind beispielsweise beim PROFIBUS unter der Bezeichnung "Knotentaufe" bekannt. Dabei wird mittels des Service-Access-Points (SAP) 55 über einen quittierten SRD-Dienst die Adresse vergeben.

Beim Verfahren des Standes der Technik wird jeder neu an das Bussystem angeschlossene Busteilnehmer angesprochen, der unter der voreingestellten Adresse (definitionsgemäß die Adresse 126) adressierbar ist. Es darf daher zu einem Zeitpunkt stets nur ein Busteilnehmer vorhanden sein, der unter dieser Adresse adressierbar ist. Denn beim Verfahren des Standes der Technik übernimmt jeder angesprochene, neu an das Bussystem angeschlossene Busteilnehmer die übermittelte Adresse, unabhängig davon, ob die übermittelte Adresse noch von einem weiteren Busteilnehmer übernommen wird oder nicht.

Die US 4 730 251 beschreibt ein automatisches Adressvergabesystem mit einer Mehrzahl an einen Bus angeschlossenen Ein-/Ausgabebaugruppen. Jede Baugruppe enthält eine eindeutige maschinenlesbare Identifizierung, welche für die Auswahl der Baugruppe für die Adressvergabe vorgesehen ist. Die Identifizierung ist eine binäre Bitfolge. Jede Position innerhalb der Bitfolge wird von einem Zentralrechner seriell ausgewählt, wobei der Zentralrechner spezifiziert, welcher binäre Wert erforderlich ist. Alle Baugruppen, deren Identifizierung an der entsprechenden Bitposition den erforderlichen Wert aufweist, antworten dem Zentralrechner entsprechend positiv und bleiben an der Adressvergabe beteiligt. Die anderen Baugruppen antworten nicht und werden nicht weiter an der Adressvergabe beteiligt. Nachdem die Bitfolge komplett abgearbeitet wurde, wird die Adresse für die entsprechende Baugruppe dieser Baugruppe mitgeteilt und das Verfahren beginn wiederum beim ersten Bit innerhalb der Bitfolge, bis allen Baugruppen eine Adresse zugeteilt wurde.

Die US 4 847 834 beschreibt ein Local Area Network (LAN), bei welchem ein Controller an ein Übertragungsmittel angeschlossen ist. Mehrere Endgeräte sind an das Übertragungsmedium angeschlossen, um Adressanfragen zu initiieren. Jedes Endgerät enthält Mittel zur lokalen Generierung und Speicherung von Zufallszahlen. Die Zufallszahl wird mit der Adressanfrage an den Controller übertragen. Der Controller weist daraufhin dem anfragenden Endgerät eine Adresse zu und erweitert diese Adresse mit der empfangenen Zufallszahl. Erkennt das Endgerät die zugewiesene Adresse mit der von ihm generierten Zufallszahl, so identifiziert das Endgerät die Adresse als die ihm zugewiesene Adresse.

Die Aufgabe der vorliegenden Erfindung besteht darin, ein Adressvergabeverfahren zu schaffen, bei dem stets eine ordnungs- und projektgemäße Adressvergabe möglich ist, auch wenn gleichzeitig mehrere Busteilnehmer neu an das Bussystem angeschlossen werden.

Die Aufgabe wird dadurch gelöst, dass dem Busteilnehmer zusätzlich zur neuen Adresse eine Kennung übermittelt wird, dass der Busteilnehmer die übermittelte Kennung mit einer im Busteilnehmer abgespeicherten Kennung vergleicht und die übermittelte neue Adresse nur dann übernimmt, wenn die übermittelte Kennung mit der im Busteilnehmer abgespeicherten Kennung übereinstimmt.

Denn dann übernimmt unabhängig von der Anzahl der neu an das Bussystem angeschlossenen Busteilnehmer nur derjenige Busteilnehmer, dessen Kennung übermittelt wurde, die übermittelte neue Adresse.

Das Übermitteln der Kennung und der neuen Adresse wird von dem neu an das Bussystem angeschlossenen Busteilnehmer nicht quittiert. Denn dann können auch bei mehreren gleichzeitig bzw. quasi gleichzeitig an das Bussystem angeschlossenen Busteilnehmern keine Störungen auf dem Bussystem entstehen.

Wenn der Busmaster unmittelbar vor dem Übermitteln der Kennung und der neuen Adresse überprüft, ob bereits ein anderer Busteilnehmer unter der neuen Adresse adressierbar ist, kann es nicht geschehen, dass eine Adresse versehentlich mehrfach vergeben wird.

Falls die zu vergebende neue Adresse bereits vergeben ist, kann dabei wahlweise die "Knotentaufe" unterbleiben oder mit einer anderen Adresse vorgenommen werden. Auch ist es möglich, eine Fehlermeldung auszugeben.

Wenn der Busmaster unmittelbar nach dem Übermitteln der Kennung und der neuen Adresse überprüft, ob der neu an das Bussystem angeschlossene Busteilnehmer unter der neuen Adresse adressierbar ist, und im Falle der Nichtadressierbarkeit des neu an das Bussystem angeschlossenen Busteilnehmers die Kennung und die neue Adresse erneut übermittelt, wird die Adressvergabe wiederholt, bis der neu an das Bussystem angeschlossene Busteilnehmer seinen neue Adresse übernommen hat. Somit ist sichergestellt, dass die Adressvergabe tatsächlich vorgenommen wird. Die Verfahren zum Überprüfen der Adressvergabe sind an sich bekannt.

Wenn der Busmaster erkennt, dass ein Busteilnehmer nicht mehr ansprechbar ist, nimmt er das Adressvergabeverfahren wieder auf.

Wenn die neue Adresse vom Busteilnehmer remanent gespeichert wird, bleibt die neu vergebene Adresse auch bei einem Spannungsausfall erhalten. Sie muss nicht wieder neu vergeben werden. Die neue Adresse kann beispielsweise in einem gepufferten RAM oder in einem EEPROM abgespeichert werden.

Ein typischer Anwendungsfall für das erfindungsgemäße Adressvergabeverfahren ist bei einem Feldbus, z. B. dem PROFIBUS, gegeben.

Weitere Vorteile und Einzelheiten ergeben sich aus der nachfolgenden Beschreibung eines Ausführungsbeispiels. Dabei zeigen in Prinzipdarstellung
- FIG 1: ein Bussystem,
- FIG 2: einen Busmaster,
- FIG 3: einen Busteilnehmer,
- FIG 4: ein Ablaufdiagramm für den Busmaster und

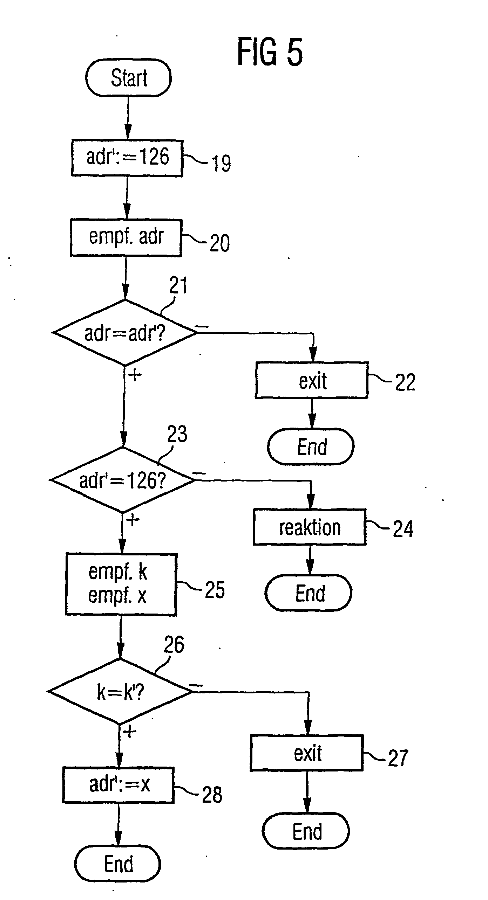

- FIG 5: ein Ablaufdiagramm für den Busteilnehmer.

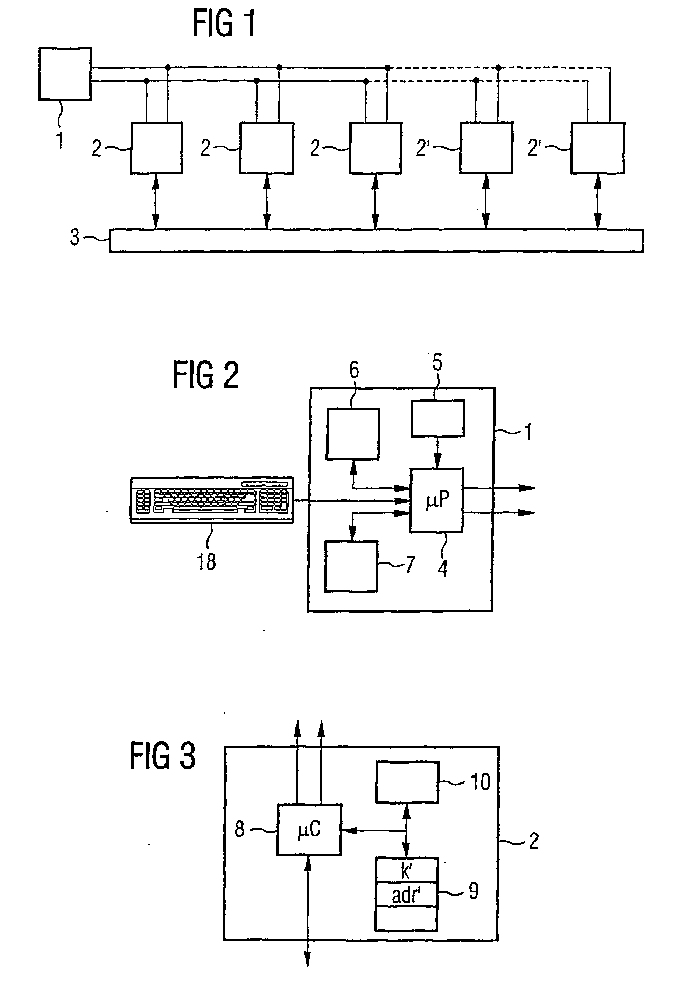

Gemäß FIG 1 weist ein Bussystem einen Busmaster 1 und mehrere, gemäß FIG 1 z. B. drei, an das Bussystem angeschlossene passive Busteilnehmer 2 auf. Das Bussystem ist als serielles Bussystem ausgebildet, wie es bei Feldbussen, z. B. dem PROFIBUS, allgemein üblich ist. Mittels des Bussystems wird eine technische Anlage 3 gesteuert und kontrolliert. Zur Kommunikation zwischen dem Busmaster 1 und den Busteilnehmern 2 gibt der Busmaster Adressen und gegebenenfalls einen Befehl und/oder Daten an die Busteilnehmer 2 aus. Diese überprüfen anhand der ausgegebenen Adresse, ob sie angesprochen sind. Nur wenn sie angesprochen sind, reagieren sie.

Der Busmaster 1 weist gemäß FIG 2 einen Mikroprozessor 4 auf. Der Mikroprozessor 4 arbeitet ein Computerprogrammprodukt ab, das z. B. in einem EEPROM 5 abgespeichert ist. In einem Datenspeicher 6 sind vom Mikroprozessor 4 verwaltete Daten abgespeichert, in einem weiteren EEPROM 7 die Adressen der einzelnen Busteilnehmer 2.

Die Busteilnehmer 2 weisen gemäß FIG 3 einen Mikrocontroller 8 auf. Dieser arbeitet ebenfalls ein Computerprogrammprodukt ab, das in einem EEPROM 9 abgespeichert ist. In einem Datenspeicher 10 puffert der Busteilnehmer 2 Daten zwischen dem Busmaster 1 und der technischen Anlage 3. Im EEPROM 9 sind ferner eine Kennung k' sowie eine Adresse adr' abgespeichert.

Die Kennung k' muss zumindest innerhalb des Bussystems eindeutig sein. Vorzugsweise wird sie bereits vom Hersteller des Busteilnehmers 2 im EEPROM 9 hinterlegt. Durch geeignete Maßnahmen kann dabei sichergestellt werden, dass diese Kennung k' weltweit nur ein einziges Mal vergeben wird.

Die Adresse adr' wird zunächst auf einen vorbekannten Wert, beim PROFIBUS z. B. auf den Wert 126, eingestellt. Unter dieser Adresse adr' ist der Busteilnehmer 2 ansprechbar, bis die Adresse adr' vom Busmaster 1 in einen anderen Wert, z. B. zwischen 1 und 125, geändert wird.

Das obenstehend zu den Busteilnehmern 2 Gesagte gilt auch für weitere Busteilnehmer 2', die neu an das Bussystem angeschlossen werden sollen. Der einzige Unterschied zwischen den Busteilnehmern 2 und den Busteilnehmern 2' besteht darin, dass erstere bereits am Bus unter Adressen adr' zwischen 1 und 125 betrieben werden, während die neu angeschlossenen Busteilnehmer 2' noch ihre Anfangsadresse 126 aufweisen.

Um die neu an das Bussystem angeschlossenen Busteilnehmer 2' ordnungsgemäß betreiben zu können, muss zunächst deren Anfangsadresse 126 geändert werden. Hierzu wird wie folgt verfahren:

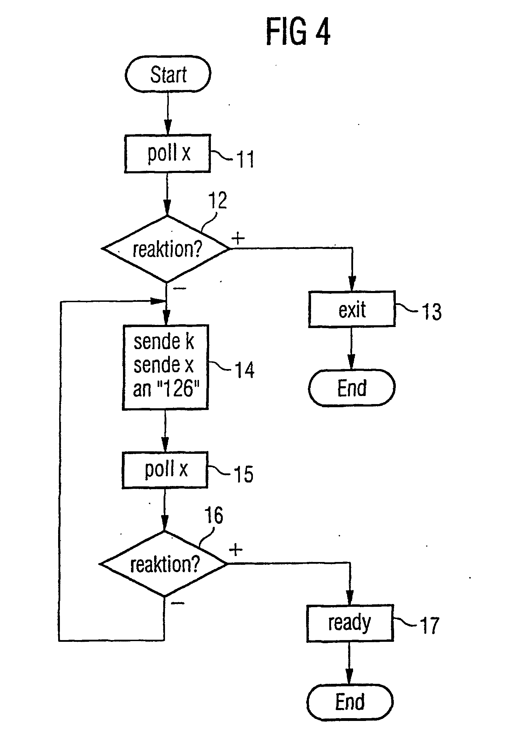

Gemäß FIG 4 fragt der Busmaster 1 zunächst in einem Schritt 11 innerhalb des Bussystems eine neu zu vergebende Adresse x ab. Falls der Busmaster 1 in einem Schritt 12 bei dieser Adresse x eine Reaktion feststellt, verlässt er gemäß einem Schritt 13 das Adressvergabeprogramm. Der Busmaster 1 überprüft also zunächst, ob bereits ein Busteilnehmer 2 unter der neu zu vergebenden Adresse x adressierbar ist.

Wenn der Busmaster 1 keine Reaktion feststellt, sendet er unter der Adresse 126 eine Kennung k sowie die neu zu vergebende Adresse x. Unmittelbar danach fragt er erneut, ob unter der Adresse x ein Busteilnehmer 2, 2' reagiert. Stellt der Busmaster 1 in einem Schritt 16 eine Reaktion fest, hat der neu an das Bussystem angeschlossene Busteilnehmer 2' die Adresse x übernommen, ist also nunmehr unter dieser Adresse x adressierbar. In diesem Fall ist die Adressvergabe gemäß einem Schritt 17 beendet. Ansonsten wiederholt der Busmaster 1 die Schritte 14 bis 16.

Die Kennung k kann dem Busmaster 1 - siehe FIG 2 - beispielsweise über eine Tastatur 18 oder ein beliebiges anderes Eingabemittel vorgegeben werden. Ergänzend sei ferner noch erwähnt, dass die Wiederholung der Schritte 14 bis 16 auf eine vorbestimmte Anzahl begrenzt sein kann, z. B. drei oder vier Durchläufe.

Vor der Übernahme der zu vergebenden Adresse x erhält der Busteilnehmer 2' in einem Schritt 19 seine Adresse adr' zunächst auf den Wert 126 eingestellt. Danach empfängt der Busteilnehmer 2' in einem Schritt 20 über das Bussystem eine Adresse adr, unter der der Busmaster 1 die Busteilnehmer 2, 2' adressiert. In einem Schritt 21 überprüft der Busteilnehmer 2', ob die empfangene Adresse adr mit seiner eigenen Adresse adr' übereinstimmt. Wenn nicht, ist der betreffende Busteilnehmer 2' nicht angesprochen und beendet daher gemäß einem Schritt 22 den weiteren Empfang von Informationen.

Wenn die Adressen adr, adr' übereinstimmen, überprüft der Busteilnehmer 2' in einem Schritt 23, ob seine Adresse adr' noch auf den Wert 126 eingestellt ist. Wenn nein, wurde an diesen Busteilnehmer 2' bereits eine neue Adresse vergeben. In diesem Fall arbeitet er gemäß einem Schritt 24 eine andere Reaktion ab. Ansonsten empfängt der Busteilnehmer 2' in einem Schritt 25 die übermittelte Kennung k und die zu vergebende Adresse x.

Sodann überprüft der Busteilnehmer 2' in einem Schritt 26, ob die übermittelte Kennung k mit der in ihm abgespeicherten Kennung k' übereinstimmt. Wenn nicht, ist er nicht angesprochen und beendet die Adressänderungsroutine gemäß einem Schritt 27. Ansonsten übernimmt er in einem Schritt 28 die übermittelte Adresse x als seine neue Adresse adr'. Die übermittelte Adresse x wird von dem Busteilnehmer 2' im EEPROM 9, also remanent, gespeichert. Bei weiteren Aufrufen ist dieser Busteilnehmer 2' dann nicht mehr unter der Adresse 126, sondern unter der Adresse x adressierbar.

Die Adresse k kann vom Busteilnehmer 2' auch nichtremanent abgespeichert werden. In diesem Fall kann z. B. beim Hochlauf zunächst stets die vorbestimmte Adresse, z. B. 126, angenommen werden.

Prinzipiell kann für jedes Kennungs-Adress-Paar ein eigenes Telegramm verwendet werden. Gegebenenfalls können aber auch mehrere Paare zu einem Telegramm zusammengefasst werden. Auch können bei einer großen Anzahl neu an das Bussystem angeschlossener Busteilnehmer 2' auch mehrere Telegramme mit jeweils mehreren Paaren übermittelt werden.

Der entscheidende Vorteil der vorliegenden Erfindung besteht darin, dass der Busteilnehmer 2' das Übermitteln der Kennung k und der neuen Adresse x nicht quittiert. Dadurch können in einem Durchgang mehrere Busteilnehmer 2' neu an das Bussystem angeschlossen werden.

## Patentansprüche

1. Adressvergabeverfahren für mindestens einen neu an ein Bussystem angeschlossenen Busteilnehmer (2'),
- wobei der Busteilnehmer (2') zunächst unter einer voreingestellten Adresse (126) adressierbar ist,
- wobei ein Busmaster (1) dem Busteilnehmer (2') eine neue Adresse (x) und eine Kennung (k) übermittelt,
- wobei der Busteilnehmer (2') die übermittelte Kennung (k) mit einer im Busteilnehmer (2') abgespeicherten Kennung (k') vergleicht und
- wobei der Busteilnehmer (2') die übermittelte neue Adresse (x) übernimmt, wenn die übermittelte Kennung (k) mit der im Bussteilnehmer (2') abgespeicherten Kennung (k') übereinstimmt,
- wobei der Busteilnehmer (2') sodann unter der neuen Adresse (x) adressierbar ist, **dadurch gekennzeichnet,**
**dass** der Busmaster (1) nach dem Übermitteln der Kennung (k) und der neuen Adresse (x) überprüft, ob der neu an das Bussystem angeschlossene Busteilnehmer (2') unter der neuen Adresse (x) adressierbar ist, und dass der Busmaster (1) im Falle der Nichtadressierbarkeit des neu an das Bussystem angeschlossenen Busteilnehmers (2') die Kennung (k) und die neue Adresse (x) erneut übermittelt.

2. Adressvergabeverfahren nach Anspruch 1,
**dadurch gekennzeichnet,**
**dass** der Busteilnehmer (2') das Übermitteln der Kennung (k) und der neuen Adresse (x) nicht quittiert.

3. Adressvergabeverfahren nach Anspruch 1 oder 2,
**dadurch gekennzeichnet,**
**dass** der Busmaster (1) vor dem Übermitteln der Kennung (k) und der neuen Adresse (x) überprüft, ob bereits ein anderer Busteilnehmer (2) unter der neuen Adresse (x) adressierbar ist.

4. Adressvergabeverfahren nach einem der obigen Ansprüche,
**dadurch gekennzeichnet,**
**dass** die neue Adresse (x) vom Busteilnehmer (2') remanent gespeichert wird.

5. Adressvergabeverfahren nach einem der obigen Ansprüche,
**dadurch gekennzeichnet,**
**dass** es bei einem Feldbus, z. B. dem PROFIBUS, angewendet wird.

6. Computerprogrammprodukt für einen Busmaster (1) zur Durchführung eines Adressvergabeverfahrens nach einem der obigen Ansprüche.

7. Mit einem Computerprogrammprodukt nach Anspruch 6 programmierter Busmaster.

8. Computerprogrammprodukt für einen Busteilnehmer (2') zur Durchführung eines Adressvergabeverfahrens nach einem der Ansprüche 1 bis 5.

9. Busteilnehmer zur Durchführung eines Adressvergabeverfahrens nach einem der Ansprüche 1 bis 5.

10. Busteilnehmer nach Anspruch 9,
**dadurch gekennzeichnet,**
**dass** er mit einem Computerprogrammprodukt nach Anspruch 8 programmiert ist.

## Claims

1. An address assignment method for at least one bus device (2') that has been newly connected to a bus system,
- whereby the bus device (2') is first addressable at a pre-set address (126),
- whereby a bus master (1) transmits a new address (x) and an identification (k) to the bus device (2'),
- whereby the bus device (2') compares the transmitted identification (k) with an identification (k') stored in the bus device (2'), and
- whereby the bus device (2') assumes the transmitted new address (x) if the transmitted identification (k) corresponds to the identification (k') stored in the bus device (2'),
- whereby the bus device (2') is then addressable at the new address (x),
**characterized in that**
the bus master (1), after transferring the identification (k) and the new address (x), checks whether the bus device (2') newly connected to the bus system is addressable at the new address (x), and, if the bus device (2') newly connected to the bus system is not addressable, the bus master (1) retransmits the identification (k) and the new address (x).

2. An address assignment method according to Claim 1,
**characterized in that**
the bus device (2') does not acknowledge the transmission of the identification (k) and the new address (x).

3. An address assignment method according to Claim 1 or 2,
**characterized in that**
the bus master (1), before transferring the identification (k) and the new address (x), checks whether a different bus device (2') is already addressable at the new address (x).

4. An address assignment method according to one of the above claims,
**characterized in that**
the new address (x) is retentively stored by the bus device (2').

5. An address assignment according to one of the above claims,
**characterized in that**
it is used in a field bus, e.g. the PROFIBUS.

6. A computer program product for a bus master (1) to carry out an address assignment method according to one of the above claims.

7. A bus master programmed with a computer program product according to Claim 6.

8. A computer program product for a bus device (2') to carry out an address assignment method according to one of Claims 1 to 5.

9. A bus device to carry out an address assignment method according to one of Claims 1 to 5.

10. A bus device according to Claim 9,
**characterized in that**
it is programmed with a computer program product according to Claim 8.

## Revendications

1. Procédé d'attribution d'adresse pour au moins un utilisateur de bus (2') nouvellement raccordé à un système de bus,
- l'utilisateur de bus (2') étant d'abord adressable avec une adresse préréglée (126),
- un maître de bus (1) transmettant à l'utilisateur de bus (2') une nouvelle adresse (x) et un identificateur (k),
- l'utilisateur de bus (2') comparant l'identificateur transmis (k) à un identificateur (k') mémorisé dans l'utilisateur de bus (2'), et
- l'utilisateur de bus (2') prenant en charge la nouvelle adresse transmise (x) si l'identificateur transmis (k) est identique à l'identificateur (k') mémorisé dans l'utilisateur de bus (2'),
- l'utilisateur de bus (2') étant ensuite adressable avec la nouvelle adresse (x),
**caractérisé par le fait que**, après la transmission de l'identificateur (k) et de la nouvelle adresse (x), le maître de bus (1) vérifie si l'utilisateur de bus (2') nouvellement raccordé au système de bus est adressable avec la nouvelle adresse (x) et, si l'utilisateur de bus (2') nouvellement raccordé au système de bus n'est pas adressable, le maître de bus (1) transmet à nouveau l'identificateur (k) et la nouvelle adresse (x).

2. Procédé d'attribution d'adresse selon la revendication 1,
**caractérisé par le fait que** l'utilisateur de bus (2') n'accuse pas réception de la transmission de l'identificateur (k) et de la nouvelle adresse (x).

3. Procédé d'attribution d'adresse selon la revendication 1 ou 2,
**caractérisé par le fait que** le maître de bus (1) vérifie avant la transmission de l'identificateur (k) et de la nouvelle adresse (x) si un autre utilisateur de bus (2) est déjà adressable avec la nouvelle adresse (x).

4. Procédé d'attribution d'adresse selon l'une des revendications précédentes,
**caractérisé par le fait que** la nouvelle adresse (x) est mémorisée de façon rémanente par l'utilisateur de bus (2').

5. Procédé d'attribution d'adresse selon l'une des revendications précédentes,
**caractérisé par le fait qu'**il est appliqué à un bus de terrain, par exemple le PROFIBUS.

6. Programme informatique pour un maître de bus (1 ) pour la mise en oeuvre d'un procédé d'attribution d'adresse selon l'une des revendications précédentes.

7. Maître de bus programmé avec un programme informatique selon la revendication 6.

8. Programme informatique pour un utilisateur de bus (2') pour la mise en oeuvre d'un procédé d'attribution d'adresse selon l'une des revendications 1 à 5.

9. Utilisateur de bus pour la mise en oeuvre d'un procédé d'attribution d'adresse selon l'une des revendications 1 à 5.

10. Utilisateur de bus selon la revendication 9,
**caractérisé par le fait qu'**il est programmé avec un programme informatique selon la revendication 8.
